# FASCICULE DE BREVET EUROPEEN

(11) **EP 2 261 593 B1**
(45) Date de publication et mention de la délivrance du brevet: **21.12.2011**
(21) Numéro de dépôt: 10290309.3
(22) Date de dépôt: 08.06.2010
(51) Int. Cl.: F42B 10/66

(54) **Système pour contrôler la trajectoire d'un mobile mû par réaction**
System zur Kontrolle der Bewegungsbahn eines reaktionsangetriebenen Körpers
System for controlling the path of a mobile moved by jet propulsion

(30) Priorité: 12.06.2009 FR 0902861
(43) Date de publication de la demande: 15.12.2010
(73) Titulaire: MBDA France, 75016 Paris (FR)
(72) Inventeur: Carton, Laurent, 18400 Saint Florent sur Cher (FR)
(74) Mandataire: Hauer, Bernard

(56) Documents cités:
- GB-A- 1 230 760
- US-A- 4 562 980
- US-A1- 2008 179 449

## Description

La présente invention concerne un système pour contrôler la trajectoire d'un mobile, tel qu'un missile, un satellite, etc..., ainsi qu'un mobile pourvu d'un tel système. Quoique non exclusivement, elle est particulièrement appropriée au guidage de missiles pourvus d'un accélérateur de poussée, lors de la phase de lancement desdits missiles.

On sait que, pour les mobiles mus par réaction, il est usuel de contrôler leur trajectoire par orientation de la poussée, notamment lors de la phase d'accélération initiale afin de réduire la trajectoire et le temps de vol du mobile.

On connaît ainsi un système pour le contrôle de la trajectoire d'un missile comportant quatre gouvernes en matériau réfractaire à la chaleur (par exemple des matériaux composites carbone/carbone), directement implantées dans la tuyère de l'accélérateur de poussée, au coeur du flux des gaz de propulsion, et commandées chacune par un actionneur.

Cependant, l'abrasion progressive des gouvernes, soumises en permanence à un échauffement important par les gaz de propulsion, engendre une dégradation de la déflexion de poussée au cours du temps. En outre, la nécessité d'un actionneur par gouverne (soit quatre actionneurs pour l'ensemble du système de contrôle) augmente considérablement la masse et le coût d'un tel système de contrôle de trajectoire embarqué à bord du missile.

La présente invention a pour objet de remédier à ces inconvénients.

A cette fin, selon l'invention, le système pour contrôler la trajectoire d'un mobile, définie par un point de lancement et un point cible, ledit mobile étant mû par réaction et comportant au moins une tuyère, fixe par rapport au fond arrière dudit mobile et à symétrie de révolution par rapport à l'axe longitudinal de ce dernier, ledit système comportant au moins un déflecteur de flux mobile extérieur à ladite tuyère et apte à pénétrer dans le flux de sortie de ladite tuyère de manière à provoquer une déviation dudit mobile,
est remarquable en ce que ledit système comporte des moyens pour orienter angulairement ledit déflecteur par rotation autour de l'axe longitudinal dudit mobile, préalablement au lancement de ce dernier, de manière à permettre en vol la déviation dudit mobile dans un plan sensiblement vertical passant par ledit point de lancement et ledit point cible, par l'action dudit déflecteur.

Ainsi, grâce à l'invention, ledit déflecteur de flux est disposé en dehors de la tuyère et n'est donc pas soumis, de façon permanente, à un échauffement important des gaz de propulsion, ce qui réduit considérablement son usure et améliore le contrôle de la trajectoire au cours du temps. De plus, la tuyère dudit mobile est de préférence simple et immobile, ce qui ne rend pas indispensable l'intégration de partie mobile complexe étanche aux gaz de propulsion.

En outre, la phase d'accélération initiale étant généralement de courte durée (quelques secondes au maximum), il est avantageux d'orienter angulairement ledit déflecteur préalablement au lancement dudit mobile, de sorte que seule la déviation du mobile dans le plan vertical puisse éventuellement être effectuée lors de la phase d'accélération initiale. On réduit ainsi la trajectoire et le temps de vol du mobile.

On remarquera que le document américain US-4562980A décrit un mobile mû par réaction comprenant :
- trois déflecteurs d'un premier type, inclinables chacun dans un plan longitudinal passant par l'axe longitudinal du mobile, qui sont destinés à orienter ledit mobile dans l'espace ; et
- deux déflecteurs d'un second type destinés à entraîner en rotation le mobile autour de son axe longitudinal. Ces déflecteurs de second type, en permettant la mise en rotation angulaire du mobile autour de son axe longitudinal, entrainent en rotation autour de cet axe les déflecteurs de premier type.

Toutefois, l'orientation des déflecteurs de premier type autour de l'axe longitudinal est obtenue uniquement au cours du vol du mobile, après lancement de celui-ci, grâce à l'interaction des déflecteurs de second type et du flux en sortie du mobile. Aucune orientation angulaire des déflecteurs, préalablement au lancement du mobile et sans interaction avec le flux de sortie de ce dernier, n'est réalisée contrairement à la présente invention.

Dans un mode de réalisation de l'invention, ledit mobile étant initialement lancé depuis un tube de lancement de forme cylindrique, ledit tube comporte, sur sa paroi latérale, un anneau périphérique saillant denté et lesdits moyens d'orientation angulaire comprennent :
- au moins un actionneur, par exemple du type à vis sans fin, apte à coopérer avec ledit anneau denté dudit tube, de manière à orienter angulairement ledit mobile par rotation dudit tube autour de son axe longitudinal, et
- ledit tube de lancement orientable angulairement.

Ainsi, les moyens d'orientation angulaire ne sont pas montés à bord du mobile, ce qui réduit d'autant la masse et le coût de celui-ci. En outre, l'orientation angulaire du mobile peut être réalisée préalablement à son lancement.

Dans un autre mode de réalisation de l'invention, ledit mobile étant de forme cylindrique, lesdits moyens d'orientation angulaire comprennent :
- au moins un actionneur, par exemple du type à vis sans fin, extérieur audit mobile ; et
- un anneau périphérique saillant denté, solidaire de la paroi latérale dudit mobile et apte à coopérer avec ledit actionneur, de manière à orienter angulairement ledit mobile par rotation autour de son axe longitudinal, préalablement au lancement.

Ainsi, quelle que soit la forme extérieure du tube de lancement du mobile (par exemple à section carrée), l'orientation angulaire dudit mobile peut être réalisée préalablement au lancement de celui-ci.

Selon encore un autre mode de réalisation de l'invention, lesdits moyens d'orientation angulaire comportent :
- au moins un actionneur, par exemple du type à vis sans fin, monté sur ledit fond arrière du mobile, et
- au moins une couronne montée mobile sur ledit fond arrière dudit mobile en rotation autour de l'axe longitudinal de ladite tuyère.
En outre, dans ce mode, ledit déflecteur est articulé sur ladite couronne mobile et ladite couronne est apte à coopérer avec ledit actionneur, de manière à orienter angulairement ledit déflecteur par rotation autour de l'axe longitudinal de ladite tuyère.

Ainsi, il est possible de réaliser une orientation angulaire dudit déflecteur soit préalablement au lancement dudit mobile, soit au cours du vol de ce dernier (par exemple lors de la phase d'accélération initiale). Ledit mobile peut ainsi être aligné suivant toute direction désirée.

Par ailleurs, quel que soit le mode de réalisation de l'invention, ledit déflecteur peut comporter au moins un bras articulé sur ledit fond arrière, par une de ses extrémités, et apte à basculer autour d'un axe, ainsi qu'un élément de déflexion de flux (par exemple une palette, un godet, etc ...) solidaire de l'autre extrémité libre dudit bras.

Ladite tuyère comportant un pavillon divergent, la longueur dudit élément de déflexion est avantageusement au moins égale au diamètre de sortie dudit pavillon divergent.

De façon avantageuse, ledit élément de déflexion de flux est constitué par un matériau réfractaire à la chaleur, par exemple de type carbone-carbone.

De préférence, ledit déflecteur est commandé par un actionneur du type à vérin.

Il résulte de ce qui précède que la présente invention concerne également un mobile mû par réaction qui comporte un système tel que décrit ci-dessus.
Les figures du dessin annexé feront bien comprendre comment l'invention peut être réalisée. Sur ces figures, des références identiques désignent des éléments semblables.
La figure 1 est une vue en perspective de l'arrière d'un missile conforme à un premier mode de réalisation de la présente invention.
Les figures 2 et 3 montrent, en vue de profil, le missile de la figure 1 dans lequel le déflecteur de flux occupe respectivement une position basculée et une position repliée.
La figure 4 est une vue de côté du tube de lancement du missile de la figure 1, conforme au premier mode de réalisation.
La figure 5 est une vue semblable à celle de la figure 1, représentant l'arrière d'un missile conforme à un deuxième mode de réalisation de l'invention.
La figure 6 est un arrachement partiel du tube de lancement comportant le missile de la figure 5, conforme au deuxième mode de réalisation.
La figure 7 montre, dans une vue semblable à celle de la figure 1, l'arrière d'un missile conforme à un troisième mode de réalisation de la présente invention.

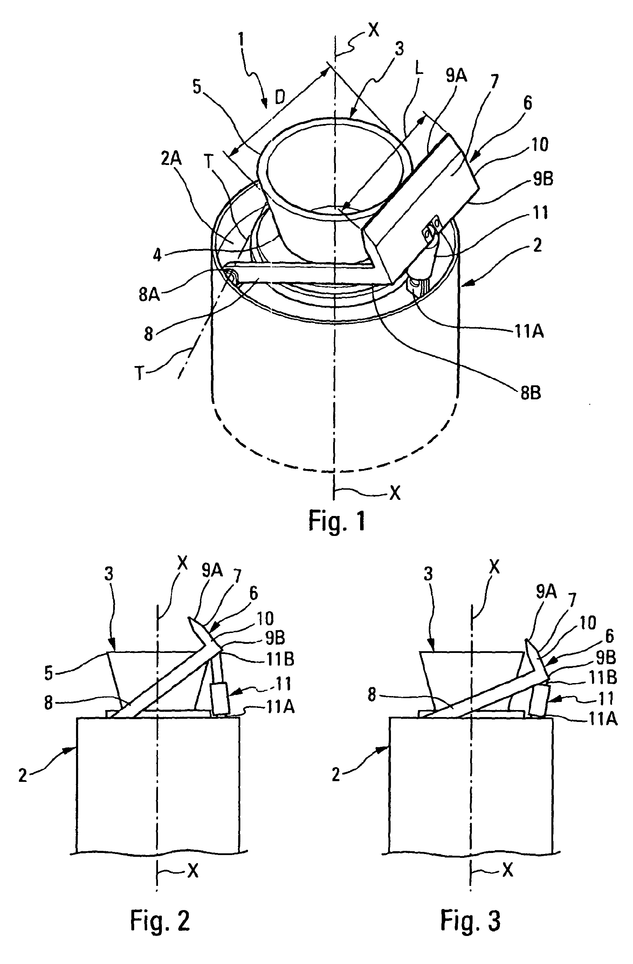

Sur les figures 1 à 3, on a représenté schématiquement la partie arrière 2 d'un missile 1, conformément au premier mode de réalisation de la présente invention.

Comme le montrent ces figures, la partie arrière 2 du missile 1 comporte une tuyère 3 destinée à propulser le missile 1 par réaction, qui est montée fixe sur le fond arrière 2A. La tuyère 3, pourvue d'un col 4 prolongé par un pavillon divergent 5, présente une symétrie de révolution autour de son axe longitudinal X-X, confondu avec l'axe longitudinal du missile 1.

En outre, un déflecteur de flux 6, comportant une palette 7 de déflexion de flux et deux bras basculants 8 (un seul étant représenté sur la figure 1), est articulé, par l'intermédiaire de ces derniers, sur le fond arrière 2A du missile 1, extérieurement à la tuyère 3.

La palette de déflexion 7, de forme rectangulaire, comporte un bord longitudinal aminci 9A, facilitant la pénétration du déflecteur 6 dans le flux de sortie de la tuyère 3. En outre, la palette est avantageusement en matériau réfractaire à la chaleur, par exemple de type carbone-carbone.

De plus, la longueur L de la palette 7 est au moins égale au diamètre de sortie D du pavillon divergent 5 de la tuyère 3.

Les bras basculants 8, encadrant de part et d'autre la tuyère 3, sont aptes à basculer, par l'intermédiaire de leur extrémité articulée 8A, autour d'un axe transverse T-T, par exemple orthogonal à l'axe longitudinal X-X de la tuyère 3.

En outre, l'extrémité libre 8B de chaque bras basculant 8 est solidaire d'un des bords latéraux 10 de la palette de déflexion 7, de sorte que le basculement des bras 8 communique un mouvement d'inclinaison à la palette 7.

Le déflecteur de flux 6 est commandé par un actionneur 11, par exemple de type vérin, articulé, à une de ses extrémités 11 A, sur le fond arrière 2A du missile 1 et, à son autre extrémité 11 B, sur le bord longitudinal 9B de la palette de déflexion 7, opposé au bord longitudinal aminci 9A. Bien entendu, il est évident que d'autres types d'actionneur pourraient être envisagés (par exemple un actionneur électrique).

Ainsi, comme le montrent les figures 2 et 3, la palette de déflexion 7 est apte à occuper deux positions limites :
- une position basculée (figure 2), dans laquelle elle défléchie de façon maximale le flux de sortie de la tuyère 3 ; et
- une position de repliée (figure 3), dans laquelle aucune déflexion du flux de sortie n'est réalisée.

La palette de déflexion 7 peut ainsi traverser le flux de sortie de la tuyère 3 entre ces deux positions limites pour dévier la trajectoire du missile 1. L'intensité de la déviation du missile 1 est liée au mouvement angulaire de la palette de déflexion 7.

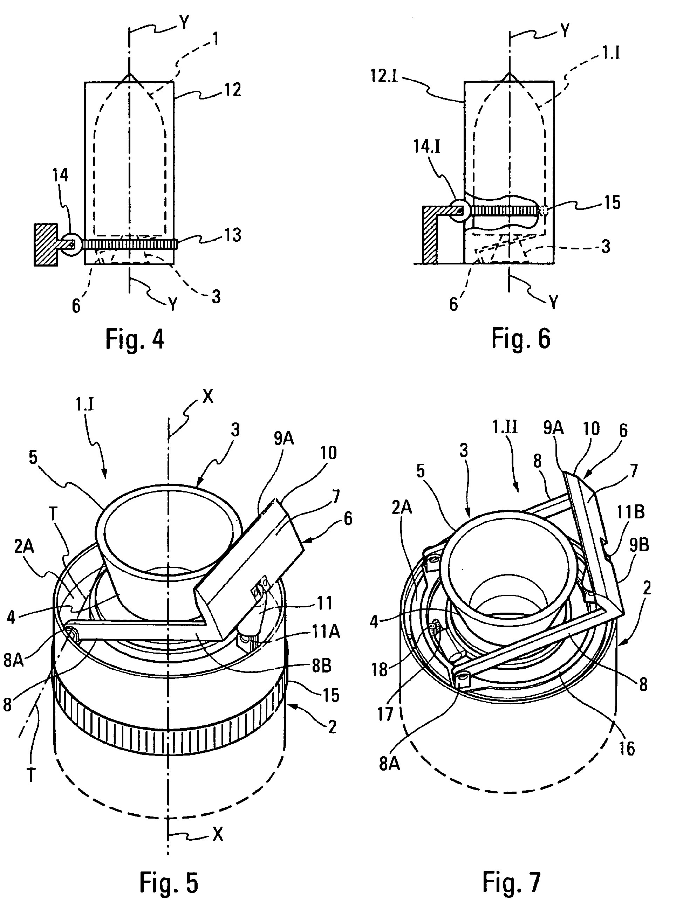

Dans ce premier mode de réalisation, comme le montre la figure 4, le missile 1 est lancé à partir d'un tube de lancement 12 de forme extérieure tubulaire. Le tube 12 comporte un anneau périphérique saillant 13 denté, apte à coopérer avec un actionneur externe 14, du type à vis sans fin, de manière à faire tourner sur lui-même ledit tube 12 autour de son axe longitudinal Y-Y.

Lorsque le missile 1 est disposé dans le tube de lancement 12 (l'axe longitudinal du missile 1 étant sensiblement confondu avec celui du tube 12), l'orientation angulaire du déflecteur de flux 6 est obtenue par rotation du tube de lancement 12 autour de son axe longitudinal Y-Y, par l'intermédiaire de l'actionneur 14.

Dans ce premier mode de réalisation, le missile 1 est associé à un système de contrôle de la trajectoire (celle-ci étant par exemple parabolique et définie par un point de lancement et un point cible) qui comporte :
- le déflecteur de flux 6 apte à pénétrer, au moins partiellement, le flux de sortie de la tuyère 3, de manière à réaliser une déviation du missile 1 au cours du vol (par exemple dans la phase d'accélération initiale) ; et
- des moyens d'orientation angulaire du déflecteur 6 (par exemple préalablement au lancement) qui comportent le tube de lancement 1 2 pourvu de l'anneau périphérique denté 13, ainsi que l'actionneur 14.

Le fonctionnement du système de contrôle de la trajectoire du missile est le suivant.

Tout d'abord, pendant la phase de préparation au lancement, on réalise l'orientation angulaire du tube de lancement 12 (supposé en position verticale) contenant le missile 1 par action de l'actionneur 14 sur l'anneau denté 13, de telle façon que la déviation du missile 1 par le déflecteur 6 soit effectuée dans le plan vertical de la trajectoire passant par le point de lancement (c'est-à-dire le tube de lancement) et le point cible. Pour cela, le bord longitudinal aminci 9A de la palette 7 est par exemple disposé orthogonalement au plan vertical de la trajectoire.

Puis, lors de la phase d'accélération initiale, la palette 7 du déflecteur 6 est amenée dans le flux de sortie de la tuyère, par l'intermédiaire de l'actionneur 11. De cette façon, la trajectoire parabolique du missile 1 peut être réduite par rapport à une trajectoire parabolique sans mise en oeuvre d'une déviation du missile, pour limiter le temps de vol du missile 1. Autrement dit, on réalise un ajustement en vol de la trajectoire du missile 1 en fonction notamment de la position du point cible.

Dans le deuxième mode de réalisation conforme à l'invention, représenté sur la figure 5, on retrouve tous les éléments décrits en regard des figures 1 et 3, excepté le fait qu'un anneau périphérique saillant 15 denté est désormais présent sur la surface latérale du missile 1.I (le tube de lancement 12.I ne comportant plus d'anneau denté saillant), par exemple sur sa partie arrière 2. Cet anneau 15 est apte à coopérer avec un actionneur 14.I du type à vis sans fin, par exemple associé au tube de lancement 12.I (voir la figure 6). L'orientation angulaire du déflecteur de flux 6 est obtenue par rotation du missile 1.I dans le tube 12.I autour de son axe longitudinal X-X, par l'intermédiaire de l'actionneur 14.I.

Ainsi, de même que pour le premier mode de réalisation, l'orientation angulaire du déflecteur de flux 6 conformément au deuxième mode de réalisation est de préférence réalisée pendant la phase de préparation au lancement. Néanmoins à la différence du premier mode, le missile 1.I est orienté directement dans le tube 12.I, ce dernier restant par exemple immobile lors de l'orientation.

Le système de contrôle de la trajectoire associé au deuxième mode de réalisation est semblable à celui du premier mode, excepté le fait que les moyens d'orientation angulaire comportent désormais l'anneau denté du missile 15, ainsi que l'actionneur 14.I du type à vis sans fin.

En outre, le fonctionnement du système de contrôle conforme au deuxième mode de réalisation est similaire à celui décrit précédemment en relation avec le premier mode.

Selon le troisième mode de réalisation de l'invention illustré sur la figure 7, le fond arrière 2A du missile 1.II comporte une couronne dentée 16 montée mobile en rotation autour de l'axe longitudinal X-X de la tuyère 3 (qui est fixe par rapport audit fond 2A), à la manière d'un palier.

Un actionneur 1 7 de type à vis sans fin, appartenant au fond arrière 2A du missile 1, est apte à mettre en rotation la couronne dentée 16, par l'intermédiaire d'un pignon 18.

De plus, un déflecteur de flux 6, semblable à celui qui a été décrit au regard de la figure 1, est monté sur la couronne mobile 16, de sorte que toute rotation de cette dernière autour de l'axe X-X met en rotation le déflecteur 6. L'actionneur 11 du déflecteur de flux 6 est également monté sur la couronne mobile 16.

Le système de contrôle de la trajectoire associé au missile 1.II, selon le troisième mode de réalisation, est embarqué à bord de ce dernier. Il comprend le déflecteur de flux 6 et des moyens d'orientation angulaire qui comportent notamment :
- l'actionneur 17 monté sur ledit fond arrière 2A du missile 1.II, et
- la couronne 16 montée mobile sur ledit fond arrière 2A du missile 1.II.

Selon ce troisième mode, l'orientation angulaire du déflecteur 6 est effectuée par la mise en rotation de la couronne mobile 16. Elle est de préférence réalisée préalablement au lancement, pendant la phase de préparation. Bien évidemment, du fait que les moyens d'orientation sont embarqués à bord du missile 1.II, l'orientation angulaire du déflecteur 6 peut également être réalisée après le lancement du missile 1.II, par exemple lors de la phase d'accélération initiale.

## Revendications

1. Système pour contrôler la trajectoire d'un mobile, définie par un point de lancement et un point cible, ledit mobile étant mû par réaction et comportant au moins une tuyère (3), fixe par rapport au fond arrière (2A) dudit mobile et à symétrie de révolution par rapport à l'axe longitudinal (X-X) de ce dernier, ledit système comportant au moins un déflecteur de flux mobile extérieur à ladite tuyère (3) et apte à pénétrer dans le flux de sortie de ladite tuyère (3) de manière à provoquer une déviation dudit mobile, **caractérisé en ce que** ledit système comporte des moyens (12, 14 ; 14.1, 15 ; 16, 17) pour orienter angulairement ledit déflecteur (6) par rotation autour de l'axe longitudinal (X-X) dudit mobile (1 ; 1. I; 1. II), préalablement au lancement de ce dernier, de manière à permettre en vol la déviation dudit mobile (1 ; 1. I ; 1 . II) dans un plan sensiblement vertical passant par ledit point de lancement et ledit point cible, par l'action dudit déflecteur (6).

2. Système selon la revendication 1, ledit mobile étant initialement lancé depuis un tube de lancement (12) de forme cylindrique,
**caractérisé :**
- **en ce que** ledit tube (12) comporte, sur sa paroi latérale, un anneau périphérique saillant denté (13) ; et
- **en ce que** lesdits moyens d'orientation angulaire comportent :
• au moins un actionneur (14), par exemple du type à vis sans fin, apte à coopérer avec ledit anneau denté (13) dudit tube (12), de manière à orienter angulairement ledit mobile (1) par rotation dudit tube (12) autour de son axe longitudinal (Y-Y), et
• ledit tube de lancement (12) orientable angulairement.

3. Système selon la revendication 1, ledit mobile étant de forme cylindrique,
**caractérisé en ce que** lesdits moyens d'orientation angulaire comprennent :
- au moins un actionneur (14.I), par exemple du type à vis sans fin, extérieur audit mobile (1.I) ; et
- un anneau périphérique saillant denté (15), solidaire de la paroi latérale dudit mobile (1.I) et apte à coopérer avec ledit actionneur (14.I), de manière à orienter angulairement ledit mobile (1.I) par rotation autour de son axe longitudinal (X-X), préalablement au lancement.

4. Système selon la revendication 1,
**caractérisé :**
- **en ce que** lesdits moyens d'orientation angulaire comportent :
• au moins un actionneur (17), par exemple du type à vis sans fin, monté sur ledit fond arrière (2A) du mobile (1.II), et
• au moins une couronne montée mobile (16) sur ledit fond arrière (2A) dudit mobile (1.II) en rotation autour de l'axe longitudinal (X-X) de ladite tuyère (3) ;
- **en ce que** ledit déflecteur (6) est articulé sur ladite couronne mobile (16) ; et
- **en ce que** ladite couronne (16) est apte à coopérer avec ledit actionneur (17), de manière à orienter angulairement ledit déflecteur (6) par rotation autour de l'axe longitudinal (X-X) de ladite tuyère (3).

5. Système selon l'une des revendications 1 à 4,
**caractérisé en ce que** ledit déflecteur (6) comporte au moins un bras (8) articulé sur ledit fond arrière (2A), par une de ses extrémités (9A), et apte à basculer autour d'un axe (T-T), ainsi qu'un élément (7) de déflexion de flux solidaire de l'autre extrémité libre (9B) dudit bras (8).

6. Système selon la revendication 5, ladite tuyère (3) comportant un pavillon divergent (5),
**caractérisé en ce que** la longueur (L) dudit élément de déflexion (7) est au moins égale au diamètre de sortie (D) dudit pavillon divergent (5).

7. Système selon l'une des revendications 5 ou 6,
**caractérisé en ce que** ledit élément de déflexion (7) est constitué par un matériau réfractaire à la chaleur.

8. Système selon l'une des revendications 1 à 7,
**caractérisé en ce que** ledit déflecteur (6) est commandé par un actionneur (11) du type à vérin.

9. Mobile mû par réaction,
**caractérisé en ce qu'**il comporte un système tel que spécifié sous l'une des revendications 1 à 8.

## Claims

1. A system for controlling the trajectory of a mobile, defined by a launch point and a target point, said mobile being jet-propelled and comprising at least one nozzle (3), being stationary with respect to the rear bottom (2A) of said mobile and with a revolution symmetry with respect to the longitudinal axis (X-X) thereof, said system comprising at least one moving flow deflector external to said nozzle (3) and being able to penetrate the outlet flow of said nozzle (3) so as to lead to a deflection of said mobile,
**characterized in that** said system comprises means (12, 14; 14.I, 15; 16, 17) for angularly orienting said deflector (6) by rotation around the longitudinal axis (X-X) of saidmobile (1 ; 1. I; 1. II), preliminarily to the launch thereof, so as to allow on flight for the deflection of said mobile (1; 1.1; 1. II) in a substantially vertical plane going through said launch point and said target point, by the operation of said deflector (6).

2. The system according to claim 1, said mobile being initially launched from a cylindrical shaped launching tube (12),
**characterized:**
- **in that** said tube (12) comprises, on its side wall, a toothed projecting peripheral ring (13); and
- **in that** said angular orientation means comprise:
• at least one actuator (14), for instance of the endless screw type, being able to cooperate with said toothed ring (13) of said tube (12), so as to angularly orient said mobile (1) by rotation of said tube (12) around its longitudinal axis (Y-Y), and
• said angularly orientable launching tube (12).

3. The system according to claim 1, said mobile having a cylindrical shape,
**characterized in that** said angular orientation means comprise:
- at least one actuator (14.I), for instance of the endless screw type, external to said mobile (1.I); and
- one toothed projecting peripheral ring (15), being integral with the side wall of said mobile (1.I) and able to cooperate with said actuator (14.I), so as to angularly orient said mobile (1.I) by rotation around its longitudinal axis (X-X), preliminarily to the launch.

4. The system according to claim 1,
**characterized:**
- **in that** said angular orientation means comprise:
• at least one actuator (17), for instance of the endless screw type, mounted on said rear bottom (2A) of the mobile (1 .II), and
• at least one moving mounted crown (16) on said rear bottom (2A) of said mobile (1. II) in rotation around the longitudinal axis (X-X) of said nozzle (3);
- **in that** said deflector (6) is hinged on said moving crown (16); and
- **in that** said crown (16) is able to cooperate with said actuator (17), so as to angularly orient said deflector (6) by rotation around the longitudinal axis (X-X) of said nozzle (3).

5. The system according to any of claims 1 to 4,
**characterized in that** said deflector (6) comprises at least one arm (8) hinged on said rear bottom (2A), through one of its ends (9A), and being able to tumble around an axis (T-T), as well as a flow deflection member (7) integral with the other free end (9B) of said arm (8) .

6. The system according to claim 5, said nozzle (3) comprising a diverging flare (5),
**characterized in that** the length (L) of said deflection member (7) is at least equal to the outlet diameter (D) of said diverging flare (5).

7. The system according to any of claims 5 or 6,
**characterized in that** said deflection member (7) is made in a heat refractory material.

8. The system according to any of claims 1 to 7,
**characterized in that** said deflector (6) is controlled by an actuator (11) of the jack type.

9. A jet-propelled mobile,
**characterized in that** it comprises a system such as specified according to any of claims 1 to 8.

## Patentansprüche

1. System zum Kontrollieren der Flugbahn eines beweglichen Körpers, die durch einen Abschusspunkt und einen Zielpunkt definiert wird, wobei der besagte bewegliche Körper durch einen Düsenantrieb bewegt wird, und zumindest eine Düse (3) umfasst, die in Bezug auf den hinteren Grund (2A) des besagten beweglichen Körpers fest, und in Bezug auf die Längsachse (X-X) von letzterem drehsymmetrisch ist, und das besagte System zumindest einen beweglichen Schubabweiser umfasst, der außerhalb der besagten Düse (3) liegt, und in der Lage ist, in den Ausgangsschub der besagten Düse (3) einzudringen, sodass eine Ablenkung des besagten beweglichen Körpers hervorgerufen wird,
**dadurch gekennzeichnet, dass** das besagte System Vorrichtungen (12, 14; 14.I, 15; 16, 17) zur Winkelausrichtung des besagten Abweisers (6) durch Drehung des besagten beweglichen Körpers (1; 1.I; 1.II) um eine Längsachse (X-X) vor dem Abschuss von letzterem umfasst, sodass die Ablenkung des besagten beweglichen Körpers (1; 1.I; 1.II) im Flug durch die Wirkung des besagten Abweisers (6) auf einer in etwa senkrechten Ebene möglich ist, die durch den besagten Abschusspunkt und den besagten Zielpunkt führt.

2. System nach Anspruch 1, wobei der besagte bewegliche Körper ursprünglich aus einem zylindrischen Abschussrohr (12) abgeschossen wird,
**dadurch gekennzeichnet:**
- **dass** das besagte Rohr (12) an seiner Seitenwandung einen umlaufenden und vorspringenden verzahnten (13) Kranz umfasst; und
- **dass** die besagten Vorrichtungen zur Winkelausrichtung folgendes umfassen:
• zumindest ein Wirkglied (14), wie beispielsweise eine Endlosschraube, das in der Lage ist, mit dem besagten Zahnkranz (13) des besagten Rohres (12) zusammenzuwirken, um den besagten beweglichen Körper (1) durch Verdrehen des besagten Rohres (12) um seine Längsachse (Y-Y) im Winkel auszurichten, und
• das besagte im Winkel ausrichtbare Abschussrohr (12).

3. System nach Anspruch 1, bei dem der besagte bewegliche Körper eine zylindrische Form aufweist,
**dadurch gekennzeichnet, dass** die besagten Vorrichtungen zur Winkelausrichtung folgendes umfassen:
- zumindest ein Wirkglied (14.I), beispielsweise in der Art einer Endlosschraube, die sich außerhalb des besagten beweglichen Körpers (1.I) befindet; und
- einen umlaufenden und vorspringenden verzahnten Kranz (15), der fest mit der Seitenwandung des besagten beweglichen Körpers (1.I) verbunden, und in der Lage ist, mit dem besagten Wirkglied (14.I) zusammenzuwirken, um den besagten beweglichen Körper (1.I) vor dem Abschuss durch Verdrehen um seine Längsachse (X-X) im Winkel auszurichten.

4. System nach Anspruch 1,
**dadurch gekennzeichnet:**
- **dass** die besagten Vorrichtungen zur Winkelausrichtung folgendes umfassen:
• zumindest ein Wirkglied (17), beispielsweise in der Art einer Endlosschraube, die auf dem besagten hinteren Grund (2A) des beweglichen Körpers (1.II) angebracht ist, und
• zumindest einen Kranz, der beweglich (16) auf dem besagten hinteren Grund (2A) des besagten beweglichen Körpers (1.II), um die Längsachse (X-X) der besagten Düse (3) drehend, angebracht ist;
- **dass** sich der besagte Abweiser (6) auf dem besagten beweglichen Kranz (16) bewegt; und
- **dass** der besagte Kranz (16) in der Lage ist, mit dem besagten Wirkglied (17) so zusammenzuwirken, dass der besagte Abweiser (6) durch eine Drehung der besagten Düse (3) um die Längsachse (X-X) im Winkel ausgerichtet wird.

5. System nach einem der Ansprüche 1 bis 4,
**dadurch gekennzeichnet, dass** der besagte Abweiser (6) zumindest einen Arm (8) umfasst, der sich an einem Ende (9A) auf dem besagten hinteren Grund (2A) bewegt, und in der Lage ist, um eine Achse (T-T) zu schwenken, sowie ein Element (7) zur Schubablenkung, das fest mit dem anderen freien Ende (9B) des besagten Armes (8) verbunden ist.

6. System nach Anspruch 5, wobei die besagte Düse (3) einen auseinanderlaufenden Trichter (5) umfasst,
**dadurch gekennzeichnet, dass** die Länge (L) des besagten Ablenkelements (7) zumindest gleich dem Ausstoßdurchmesser (D) des besagten auseinanderlaufenden Trichters (5) ist.

7. System nach einem der Ansprüche 5 oder 6,
**dadurch gekennzeichnet, dass** das besagte Ablenkelement (7) aus einem hitzebeständigen Material gefertigt ist.

8. System nach einem der Ansprüche 1 bis 7,
**dadurch gekennzeichnet, dass** der besagte Abweiser (6) von einem Wirkglied (11) in der Art eines Zylinders gesteuert wird.

9. Beweglicher Körper, der durch einen Düsenantrieb bewegt wird,
**dadurch gekennzeichnet, dass** er ein System umfasst, wie es in einem der Ansprüche 1 bis 8 spezifiziert wird.
